# EUROPEAN PATENT APPLICATION

(11) **EP 4 760 218 A1**
(43) Date of publication of application: **17.06.2026**
(21) Application number: 24879401.8
(22) Date of filing: 29.07.2024
(51) Int. Cl.: G01G 19/03, G01G 19/10

(54) **LOAD DETERMINATION DEVICE, PROGRAM, AND LOAD DETERMINATION METHOD**

(30) Priority: 17.10.2023 JP 2023179073
(71) Applicant: BRIDGESTONE CORPORATION, Chuo-ku Tokyo 104-8340 (JP)
(72) Inventor: ICHIKAWA Hiromitsu, Tokyo 104-8340 (JP)
(74) Representative: Marks & Clerk LLP
(86) International application number: PCT/JP2024/026997
(87) International publication number: WO 2025/083971

(57) **Abstract**

A loading determination apparatus (10) includes an acquisition interface (131) configured to acquire internal pressure data of a tire detected by a detection apparatus mounted on a vehicle and speed data of the vehicle, and a determiner (132) configured to determine whether the vehicle is loaded based on an amplitude of the internal pressure data and on the speed data. The determiner (132) may determine whether the vehicle is loaded by using a predetermined threshold based on a relationship between the amplitude and the speed of the vehicle.

## Description

### TECHNICAL FIELD

The present disclosure relates to a loading determination apparatus, a program, and a loading determination method.

### BACKGROUND

Conventionally, methods for estimating the load of a traveling vehicle have been proposed. For example, PTL 1 discloses a method in which a change in load is calculated from the difference between a measured pressure and a reference pressure, and from a tire model that has been previously devised to associate changes in load with changes in pressure.

### CITATION LIST

### Patent Literature

PTL 1: JP 2013-536109 A

### SUMMARY

### (Technical Problem)

Here, in the method of PTL 1, processing is performed by focusing on an increase in the internal pressure of the tire (the difference between the measured pressure and the reference pressure); however, for example, there is a risk that it may not appropriately accommodate adjustments to the internal pressure of the tire before travel, and it is also susceptible to the influence of noise in sensor measurements. Therefore, if one attempts to accurately estimate the load of the vehicle while taking these influences into account, the logic for determination becomes complicated.

Furthermore, particularly with respect to the loading of goods (minerals) in mining vehicles equipped with OR (Off the Road) tires, operational efficiency is emphasized, and it is often the case that there are only two states: loading at nearly the maximum loading capacity (full load) or loading at nearly zero (empty). For such vehicles, there is a demand to promptly determine the presence or absence of loading (full load or empty) of the vehicle with sufficient accuracy by means of a simple calculation using less data. Here, a mining vehicle refers to a vehicle such as a dump truck used in mining operations, which has a significantly larger body than a general truck and travels on unpaved rough roads.

In view of these circumstances, an object of the present disclosure is to provide a loading determination apparatus, a program, and a loading determination method capable of determining the presence or absence of loading of a vehicle by means of a simple calculation.

### (Solution to Problem)

(1) A loading determination apparatus according to one embodiment of the present disclosure includes:
   an acquisition interface configured to acquire internal pressure data of a tire detected by a detection apparatus mounted on a vehicle and speed data of the vehicle; and
   a determiner configured to determine whether the vehicle is loaded based on an amplitude of the internal pressure data and on the speed data.
(2) In one embodiment of the present disclosure, in (1) above,
   the determiner is configured to determine whether the vehicle is loaded by using a predetermined threshold based on a relationship between the amplitude and a speed of the vehicle.
(3) In one embodiment of the present disclosure, in (2) above,
   the determiner uses, as the threshold, a value determined by a model generated by machine learning using training data that takes the internal pressure data and the speed data, which are performance data, as explanatory variables and takes presence or absence of loading of the vehicle corresponding to the explanatory variables as an objective variable.
(4) In one embodiment of the present disclosure, in any one of (1) to (3) above,
   the internal pressure data is acquired at predetermined intervals, and
   the determiner is configured to use, as a speed of the vehicle, an average value of the speed data during one of the predetermined intervals.
(5) In one embodiment of the present disclosure, in any one of (1) to (4) above,
   the determiner is configured to output that determination of whether the vehicle is loaded cannot be made in a case in which a speed of the vehicle falls below a lower limit determined based on detection performance of the detection apparatus.
(6) A program according to one embodiment of the present disclosure is configured to cause a loading determination apparatus to execute processing comprising:
   acquiring internal pressure data of a tire detected by a detection apparatus mounted on a vehicle and speed data of the vehicle; and
   determining whether the vehicle is loaded based on an amplitude of the internal pressure data and on the speed data.
(7) A loading determination method according to one embodiment of the present disclosure is a loading determination method to be executed by a loading determination apparatus, comprising:
   acquiring, by the loading determination apparatus, internal pressure data of a tire detected by a detection apparatus mounted on a vehicle and speed data of the vehicle; and
   determining, by the loading determination apparatus, whether the vehicle is loaded based on an amplitude of the internal pressure data and on the speed data.

### (Advantageous Effect)

According to the present disclosure, it is possible to provide a loading determination apparatus, a program, and a loading determination method capable of determining the presence or absence of loading of a vehicle by means of a simple calculation.

### BRIEF DESCRIPTION OF THE DRAWINGS

In the accompanying drawings:
FIG. 1 is a diagram illustrating an example configuration of a loading determination system including a loading determination apparatus according to one embodiment of the present disclosure;
FIG. 2 is another diagram illustrating an example configuration of the loading determination system of FIG. 1;
FIG. 3 is a diagram exemplifying a time-series change in internal pressure data of a tire;
FIG. 4 is a diagram for explaining determination of the presence or absence of loading of a vehicle; and
FIG. 5 is an example flowchart illustrating processing of a loading determination method according to one embodiment of the present disclosure.

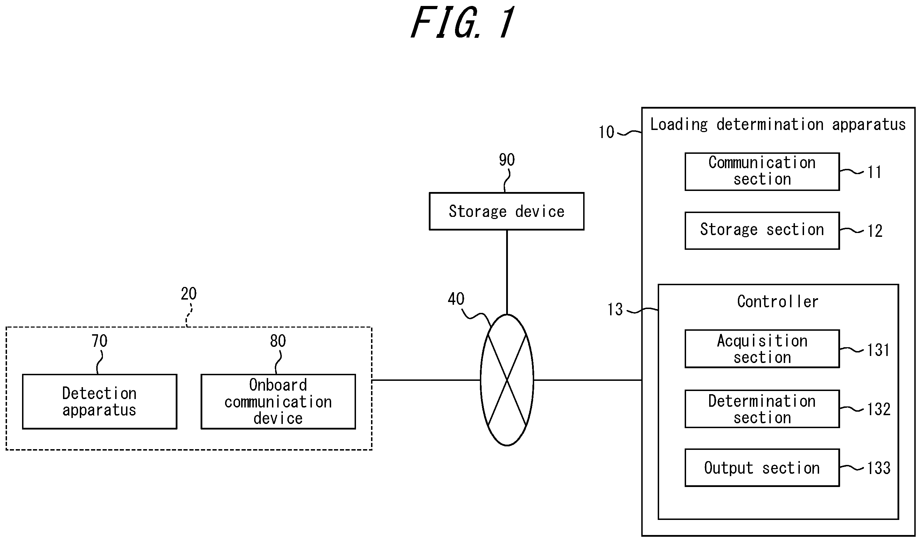

Hereinafter, with reference to the drawings, a loading determination apparatus 10 (see FIG. 1), a program, and a loading determination method according to one embodiment of the present disclosure will be described. In each drawing, the same or corresponding parts are denoted by the same reference numerals. In the description of the present embodiment, explanations of the same or corresponding parts may be omitted or simplified as appropriate.

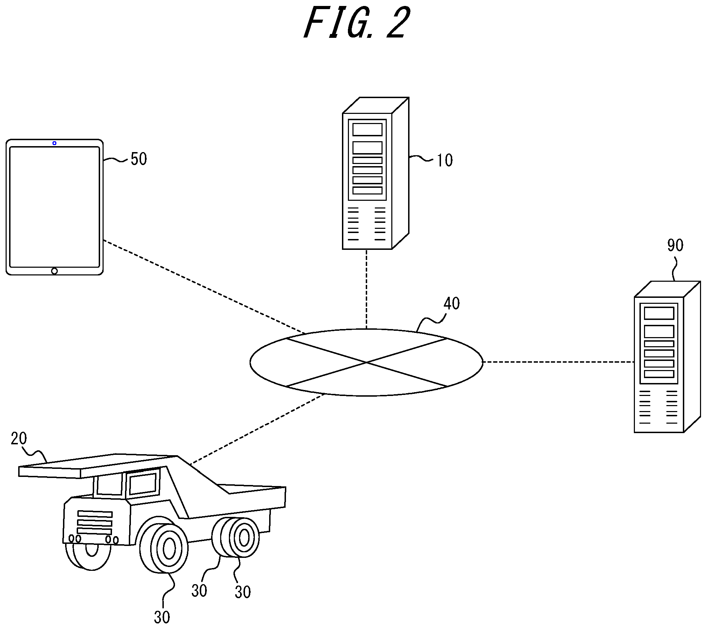

FIGS. 1 and 2 are diagrams illustrating examples of the configuration of a loading determination system. The loading determination system includes the loading determination apparatus 10. FIG. 1 is a block diagram including an example of the internal configuration of the loading determination apparatus 10 and an example of the configuration of devices mounted on a vehicle 20. FIG. 2 illustrates the overall configuration of the loading determination system.

The loading determination apparatus 10 according to the present embodiment determines whether the vehicle 20 is loaded. The determination of whether the vehicle 20 is loaded may be to determine which of two states the vehicle is in: loading at nearly the maximum loading capacity (full load) or loading at nearly zero (empty). The loading determination apparatus 10 is not limited to simply indicating whether the vehicle is loaded, but may, for example, present numerical values relating to the state of the tire 30 based on the determination result, so that a manager of the vehicle 20 or the like can determine whether tire 30 replacement, repair, or rotation (changing the mounting position) is necessary. The repair of the tire 30 may include retreading, in which the surface of the tread rubber of the tire 30 is shaved and new rubber is attached for reuse. The numerical value relating to the state of the tire 30 may be, for example, the cumulative time or operating rate of full load. For example, if the cumulative time of full load of the vehicle 20 exceeds a reference time, the manager of the vehicle 20 may determine to replace some or all of the tires 30. Here, the vehicle 20 may be, for example, a passenger car, truck, bus, or construction vehicle, and is not limited to a specific type of mobile body. In the present embodiment, the vehicle 20 is described as a mining vehicle equipped with OR tires and transporting minerals. Further, in FIGS. 1 and 2, only one vehicle 20 is depicted to avoid redundant illustration, but the loading determination system may be configured to include a plurality of vehicles 20.

The loading determination apparatus 10 includes a communication section 11, a storage section 12, and a controller 13. The controller 13 includes an acquisition interface 131, a determiner 132, and an output section 133. The loading determination apparatus 10 may be, as a hardware configuration, for example, a computer. The computer may be a server computer or a portable computer such as a laptop or tablet. Details of the components of the loading determination apparatus 10 will be described later. In the present embodiment, the loading determination apparatus 10 is a computer located at a place remote from the work site of the mining vehicle. Here, the loading determination apparatus 10 may be constituted not by a single device but by a plurality of devices disposed at different locations and capable of transmitting and receiving data with each other via a network 40. That is, a plurality of devices connected via the network 40 may function as the loading determination apparatus 10 as depicted in FIG. 1 as a whole. Therefore, for example, the loading determination apparatus 10 may be constituted by a single computer as a hardware configuration, or by a plurality of computers connected via the network 40. When constituted by a plurality of computers, the storage section 12 may be a shared memory or the like accessible by each computer.

The loading determination apparatus 10, together with devices mounted on the vehicle 20 (the detection apparatus 70 and the in-vehicle communication apparatus 80) connected via the network 40, may constitute the loading determination system. The network 40 may be, for example, the Internet. Further, the network 40 may be configured to include, for example, a LAN (Local Area Network) in part. Here, the loading determination system may further include a terminal device 50 used by a manager who manages the vehicle 20. The terminal device 50 is, for example, a general-purpose mobile terminal such as a smartphone or tablet terminal, but is not limited thereto. The terminal device 50 may function as a display section that displays the determination result output from the loading determination apparatus 10. Further, the loading determination system may be configured to include a storage device 90 (a storage device 90 on the cloud) located on the network 40 as viewed from the loading determination apparatus 10 and the devices mounted on the vehicle 20. In the present embodiment, the storage device 90 includes a database that stores, as time-series data, information relating to the state of the tire 30 detected by the detection apparatus 70 mounted on the vehicle 20, in association with the vehicle 20 as the detection target. When the in-vehicle communication apparatus 80 also outputs position information of the vehicle 20, the database also stores the position information as time-series data. Further, in the present embodiment, the loading determination apparatus 10 acquires necessary information from the database via the network 40.

In the present embodiment, the vehicle 20 includes the detection apparatus 70 and the in-vehicle communication apparatus 80. The detection apparatus 70 is a device or in-vehicle system equipped with a sensor and generates information relating to the state of the tire 30. In the present embodiment, the detection apparatus 70 is configured to include a tire pressure monitoring system (TPMS: Tire Pressure Monitoring System).

The tire pressure monitoring system monitors the pressure (internal pressure) of the tire 30 mounted on the vehicle 20. The tire pressure monitoring system may also monitor the temperature (internal temperature) of the tire 30. The tire pressure monitoring system may be configured to include, for example, a sensor installed inside the tire 30, a processor that calculates and outputs the pressure of the tire 30 based on the detection value of the sensor, and a memory that stores the detection value of the sensor and the like. The sensor may include a pressure sensor and a temperature sensor.

The in-vehicle communication apparatus 80 is a device that outputs information relating to the state of the tire 30 detected by the detection apparatus 70 so that it is accumulated in the database. In the present embodiment, the in-vehicle communication apparatus 80 is realized by the communication function of a digital tachograph, but is not limited thereto and may be, for example, a dedicated communication device. Further, the in-vehicle communication apparatus 80 may output information on the current position of the vehicle 20 to the storage device 90 or the loading determination apparatus 10. In the present embodiment, the in-vehicle communication apparatus 80 is equipped with a GPS (Global Positioning System) function and outputs GPS information including coordinates as position information of the vehicle 20. That is, in the present embodiment, the in-vehicle communication apparatus 80 outputs information on the internal pressure of the tire 30 and the position of the vehicle 20, and this information is accumulated in the database of the storage device 90 on the cloud. Here, the in-vehicle communication apparatus 80 may also output information on the temperature of the tire 30, and the temperature information may also be accumulated in the database of the storage device 90 on the cloud. Further, in the present embodiment, the in-vehicle communication apparatus 80 calculates the speed based on the position information of the vehicle 20, and information on the speed of the vehicle 20 is also accumulated in the database of the storage device 90 on the cloud.

Here, in a configuration in which the loading determination system does not include the storage device 90, the storage section 12 of the loading determination apparatus 10 may have the database.

Hereinafter, details of the components of the loading determination apparatus 10 will be described. The communication section 11 is configured to include one or more communication modules connected to the network 40. The communication section 11 may include, for example, a communication module compatible with mobile communication standards such as 4G (4^{th} Generation) or 5G (5^{th} Generation). The communication section 11 may include, for example, a communication module compatible with wired or wireless LAN standards.

The storage section 12 is one or more memories. The memory may be, for example, a semiconductor memory, magnetic memory, or optical memory, but is not limited thereto and may be any memory. The storage section 12 is, for example, built into the loading determination apparatus 10, but may be configured to be accessed externally by the loading determination apparatus 10 via any interface.

The storage section 12 stores various data used in various calculations executed by the controller 13. Further, the storage section 12 may store results and intermediate data of various calculations executed by the controller 13.

In the present embodiment, the storage section 12 may temporarily store various information from the database of the storage device 90 on the cloud acquired via the communication section 11. Further, for example, when the loading determination system is configured to include a plurality of types of vehicles 20, the storage section 12 may store vehicle information, which is information relating to each type of vehicle 20.

The controller 13 is one or more processors. The processor may be, for example, a general-purpose processor or a dedicated processor specialized for specific processing, but is not limited thereto and may be any processor. The controller 13 controls the overall operation of the loading determination apparatus 10.

Here, the loading determination apparatus 10 may have the following software configuration. One or more programs used to control the operation of the loading determination apparatus 10 are stored in the storage section 12. When the program stored in the storage section 12 is read by the processor of the controller 13, the controller 13 functions as the acquisition interface 131, the determiner 132, and the output section 133.

The acquisition interface 131 acquires input data including internal pressure data of the tire 30 detected by the detection apparatus 70 mounted on the vehicle 20 and speed data of the vehicle 20. In the present embodiment, the internal pressure data of the tire 30 is time-series data of the internal pressure of the tire 30 detected by the tire pressure monitoring system. Further, in the present embodiment, the speed data of the vehicle 20 is time-series data of the speed of the vehicle 20 calculated based on position information.

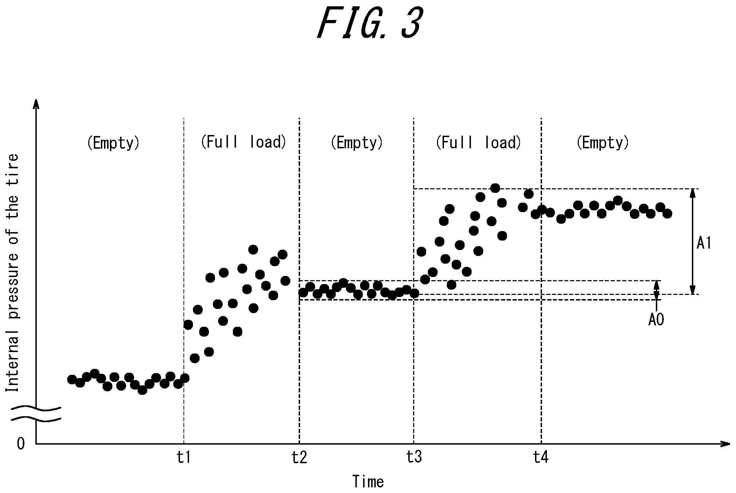

The determiner 132 determines whether the vehicle 20 is loaded based on the input data. Here, FIG. 3 is a diagram exemplifying the time-series change of the internal pressure data of the tire 30. In FIG. 3, the horizontal axis indicates time, and the vertical axis indicates the internal pressure of the tire 30. "Empty" and "Full load" in FIG. 3 indicate the loading state of the vehicle 20. "Empty" indicates a state of nearly zero loading (no load), and "Full load" indicates a state of loading at nearly the maximum loading capacity (loaded). The vehicle 20 repeatedly carries cargo to a destination, unloads the cargo at the destination, moves again in an empty state, and loads cargo again at the next location. As depicted in FIG. 3, compared to the amplitude of the internal pressure of the tire 30 when empty, the amplitude of the internal pressure during full load, when the tire 30 is under load while running with cargo, becomes larger. In FIG. 3, A0 indicates twice the amplitude value when empty, and A1 indicates twice the amplitude value when fully loaded. Here, the amplitude of the internal pressure means the range of variation of the internal pressure. In particular, since mining vehicles carry minerals several times the weight of the vehicle body and travel on unpaved rough roads, the amplitude of the internal pressure during full load becomes larger compared to the amplitude when empty. Further, especially for mining vehicles, since operational efficiency is emphasized, the vehicle is often in either the full load or empty state, and it is sufficient to determine which of the two states (presence or absence of loading) applies. By using the difference in amplitude of the internal pressure of the tire 30 as depicted in FIG. 3, it is possible to determine whether the vehicle 20 is loaded.

In the above conventional technique, the load is calculated by focusing on the difference between the measured pressure and the reference pressure, but it is greatly affected by noise in the adjustment and measurement of the internal pressure of the tire 30, making it difficult to accurately calculate the load, that is, to accurately determine whether the vehicle is loaded. In contrast, the amplitude of the internal pressure of the tire 30 is calculated regardless of the adjustment of the internal pressure (change in the level of internal pressure) and is less susceptible to noise. Therefore, it is possible to determine the presence or absence of loading more accurately than in the conventional technique.

The determiner 132 may calculate the amplitude of the internal pressure, for example, by root mean square (RMS: Root Mean Square), but is not limited to a specific calculation method.

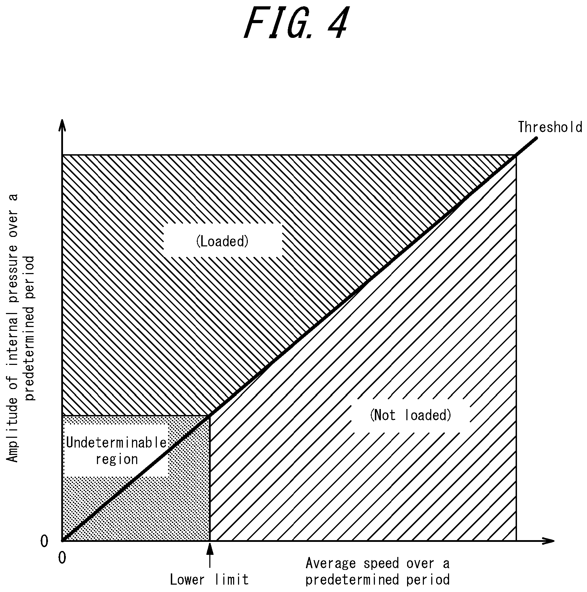

Here, the amplitude of the internal pressure of the tire 30 changes depending on the speed of the vehicle 20. For example, if the vehicle 20 is moving at high speed, the amplitude of the internal pressure of the tire 30 becomes larger compared to when moving at low speed. Therefore, the determiner 132 determines whether the vehicle 20 is loaded based on the amplitude of the internal pressure data and the speed data. FIG. 4 is a diagram for explaining the determination of whether the vehicle 20 is loaded, in which the horizontal axis indicates the speed of the vehicle 20 and the vertical axis indicates the amplitude of the internal pressure of the tire 30. As depicted in FIG. 4, the boundary between loaded and unloaded changes according to the speed.

As depicted in FIG. 4, the speed of the vehicle 20 may be the average speed over a predetermined period. Further, the amplitude of the internal pressure of the tire 30 may be the amplitude of the internal pressure over a predetermined period. That is, the internal pressure data is acquired for each predetermined period, and the determiner 132 may use the average value of the speed data over the predetermined period as the speed of the vehicle 20. The predetermined period only needs to be shorter than the loading cycle of the vehicle 20 (the period from loading cargo, unloading it at the destination, to loading cargo again). The loading cycle is the time interval from time t1 to time t3 or from time t2 to time t4 in the example of FIG. 3. For example, the detection apparatus 70 such as the tire pressure monitoring system is often battery-powered. Therefore, in order to reduce power consumption on the detection apparatus 70 side, the detected value (pressure of the tire 30) is transmitted at fixed intervals rather than continuously. The determiner 132 may set the above predetermined period so that the transmission interval from the detection apparatus 70 is not too short and a sufficient number of data points can be obtained to accurately calculate the amplitude of the internal pressure of the tire 30. By appropriately setting the predetermined period, it is possible to achieve both accuracy of determination and reduction of power consumption on the detection apparatus 70 side. As an example, when the loading cycle is 20 minutes or more and the transmission interval is 1 minute, the determiner 132 may set the predetermined period to 15 minutes.

The determiner 132 determines whether the vehicle 20 is loaded by using a predetermined threshold based on the relationship between the amplitude of the internal pressure of the tire 30 and the speed of the vehicle 20. By using a threshold, it is possible to make a determination quickly with sufficient accuracy. The determiner 132 calculates the amplitude of the internal pressure data over the predetermined period. When the determiner 132 calculates the amplitude of the internal pressure data by root mean square, it may calculate the average value of the internal pressure data over the predetermined period as the expected value. Further, the determiner 132 obtains the average speed of the speed data over the predetermined period. Then, by comparing with the threshold, that is, by determining to which region separated by the threshold the plot position of the calculated amplitude and average speed belongs, the presence or absence of loading is determined.

Here, the threshold used by the determiner 132 is not limited to a specific method, but may be determined using a model generated by machine learning, for example. In machine learning, training data may be used in which the internal pressure data and speed data, which are actual performance data (past measured values and calculated values accumulated in the database), are used as explanatory variables, and the presence or absence of loading of the vehicle 20 corresponding to those explanatory variables is used as the objective variable. As a method for specifying the threshold given as the boundary between the group with loading and the group without loading in the training data, logistic regression, support vector machine, or k-nearest neighbor method may be used, for example. By using a machine learning model based on actual performance data, it is possible to determine a threshold that enables more accurate determination. Alternatively, as another method, the operator of the loading determination apparatus 10 may determine the threshold using a graph plotting the internal pressure data and speed data, which are actual performance data, and the presence or absence of loading of the vehicle 20, which is also actual performance data corresponding thereto. In this case, the operator's experience can be reflected in determining the threshold. The determined threshold is stored in the storage section 12 and is read out when the determiner 132 executes the determination of loading. Further, in FIG. 4, the threshold is a straight line passing through the origin, but is not limited thereto and may be a straight line not passing through the origin or a curve.

Further, in the present embodiment, when the speed of the vehicle 20 falls below a lower limit determined based on the detection performance of the detection apparatus 70, the determiner 132 outputs that the determination of whether the vehicle 20 is loaded cannot be made. As described above, since the determiner 132 executes the determination using the amplitude of the internal pressure of the tire 30, it is less susceptible to noise compared to the conventional technique. However, when the vehicle 20 is moving at low speed, the detected value of the tire pressure monitoring system itself becomes small, and it may be buried in noise. In such a case, since the received internal pressure data of the tire 30 is already affected by noise, the determiner 132 cannot accurately calculate the amplitude of the internal pressure of the tire 30. Therefore, the determiner 132 determines the lower limit based on the SN ratio (signal-to-noise ratio) of the tire pressure monitoring system or the like, and, as depicted in FIG. 4, may set the region where the speed of the vehicle 20 falls below the lower limit as an undeterminable region. When the plot position of the amplitude of the internal pressure of the tire 30 and the average speed of the vehicle 20 belongs to the undeterminable region, the determiner 132 may output as the determination result that the presence or absence of loading of the vehicle 20 cannot be determined. By outputting undeterminable as the result, it is possible to avoid notifying an incorrect determination result (for example, determining loaded when actually not loaded) and to improve the reliability of the determination.

The output section 133 may output the determination result of the determiner 132 (for example, whether or not the vehicle 20 is loaded) to a terminal device 50 or the like used by an administrator who manages the vehicle 20. The output section 133 may process the determination result of the determiner 132 into a form that is easy for a viewer to understand, such as the cumulative time of full loading or the operating rate, and output the processed data to the terminal device 50 or the like. The administrator may plan or execute repairs or the like of the tire 30 to be determined, based on the displayed determination result. Further, the administrator may plan or execute a rotation or the like to change the mounting position of the tire 30 to be determined, based on the displayed determination result.

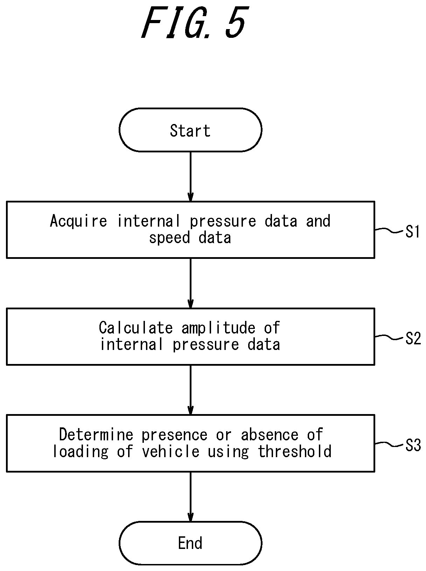

FIG. 5 is an example of a flowchart illustrating the processing of a loading determination method executed by the loading determination apparatus 10 according to the present embodiment. By executing the determination processing as illustrated in FIG. 5, the loading determination apparatus 10 can determine whether or not the vehicle 20 is loaded by a simple calculation.

The acquisition section 131 acquires internal pressure data of the tire 30 detected by the detection apparatus 70 mounted on the vehicle 20 and speed data of the vehicle 20 (step S1). The acquisition section 131 acquires the internal pressure data and speed data at the above-mentioned predetermined intervals.

The determiner 132 calculates the amplitude of the internal pressure data during the predetermined interval (step S2). Further, the determiner 132 obtains the average speed of the speed data during the predetermined interval. The determiner 132 also reads out a threshold from the storage section 12.

The determiner 132 determines, using the threshold, whether or not the vehicle 20 is loaded during the predetermined interval (step S3). As described above, the determiner 132 may make the determination based on which region the plotted position of the calculated amplitude and average speed belongs to: the loaded region, the unloaded region, or the indeterminate region (see FIG. 4).

As described above, the loading determination apparatus 10, program, and loading determination method according to the present embodiment can determine whether or not the vehicle 20 is loaded by a simple calculation with the above configuration. In particular, for mining vehicles equipped with OR tires, it becomes possible to promptly determine with sufficient accuracy whether or not the vehicle is loaded (fully loaded or empty).

The embodiments of the present disclosure have been described above with reference to the drawings and examples, but it should be noted that those skilled in the art can easily make various modifications or alterations based on the present disclosure. Therefore, it should be understood that such modifications or alterations are included within the scope of the present disclosure. For example, the functions included in each component or each step can be rearranged as long as there is no logical inconsistency, and a plurality of components or steps can be combined into one or divided. The embodiments according to the present disclosure can also be realized as a storage medium recording a program executed by a processor provided in the apparatus. It should be understood that these are also included within the scope of the present disclosure.

### REFERENCE SIGNS LIST

- 10: Loading determination apparatus
- 11: Communication section
- 12: Storage section
- 13: Controller
- 20: Vehicle
- 30: Tire
- 40: Network
- 50: Terminal device
- 70: Detection apparatus
- 80: Onboard communication device
- 90: Storage device
- 131: Acquisition section
- 132: Determiner
- 133: Output section

## Claims

1. A loading determination apparatus comprising:
an acquisition interface configured to acquire internal pressure data of a tire detected by a detection apparatus mounted on a vehicle and speed data of the vehicle; and
a determiner configured to determine whether the vehicle is loaded based on an amplitude of the internal pressure data and on the speed data.

2. The loading determination apparatus according to claim 1, wherein the determiner is configured to determine whether the vehicle is loaded by using a predetermined threshold based on a relationship between the amplitude and a speed of the vehicle.

3. The loading determination apparatus according to claim 2, wherein the determiner uses, as the threshold, a value determined by a model generated by machine learning using training data that takes the internal pressure data and the speed data, which are performance data, as explanatory variables and takes presence or absence of loading of the vehicle corresponding to the explanatory variables as an objective variable.

4. The loading determination apparatus according to any one of claims 1 to 3, wherein
the internal pressure data is acquired at predetermined intervals, and
the determiner is configured to use, as a speed of the vehicle, an average value of the speed data during one of the predetermined intervals.

5. The loading determination apparatus according to any one of claims 1 to 4, wherein the determiner is configured to output that determination of whether the vehicle is loaded cannot be made in a case in which a speed of the vehicle falls below a lower limit determined based on detection performance of the detection apparatus.

6. A program configured to cause a loading determination apparatus to execute processing comprising:
acquiring internal pressure data of a tire detected by a detection apparatus mounted on a vehicle and speed data of the vehicle; and
determining whether the vehicle is loaded based on an amplitude of the internal pressure data and on the speed data.

7. A loading determination method to be executed by a loading determination apparatus, the loading determination method comprising:
acquiring, by the loading determination apparatus, internal pressure data of a tire detected by a detection apparatus mounted on a vehicle and speed data of the vehicle; and
determining, by the loading determination apparatus, whether the vehicle is loaded based on an amplitude of the internal pressure data and on the speed data.
